# EUROPEAN PATENT APPLICATION

(11) **EP 2 112 634 A1**
(43) Date of publication of application: **28.10.2009**
(21) Application number: 08154968.5
(22) Date of filing: 22.04.2008
(51) Int. Cl.: G07F 7/10, H04L 29/08

(54) **Method for transferring provisioning information to a mobile unit**

(71) Applicant: Nec Technologies (UK) Limited, Reading, Berkshire RG2 0TD (GB)
(72) Inventor: Fok ah chuen, Frédéric, 92100, BOULOGNE-BILLANCOURT (FR); Beaugrand, Fabrice, 92500, RUEIL MALMAISON (FR)
(74) Representative: Ilgart, Jean-Christophe

(57) **Abstract**

The invention relates to a method and a mobile UE for transferring at least a set of provisioning information to at least a contactless-enabled mobile unit (6) adapted for storing said provisioning information and for returning it via a contactless channe-, wherein said provisioning information is first transmitted to a mobile User Equipment (10) through a secure channel, and then transferred to the contactless-enabled mobile unit (6) through a contactless secure channel using a predefined configuration for associating said contactless-enabled mobile unit (6)identifier with said provisioning information.

## Description

### TECHNICAL DOMAIN

The invention pertains to telecommunication fields and concerns a method for transferring provisioning information from a server to a contactless-enabled mobile unit adapted for storing said information and for returning it via a contactless channel.

The provisioning information may represent credit for accessing to a service provided by an operator, data for a control access system, or access code to a building.

The invention concerns also a contactless-enabled mobile UE (User Equipment) adapted for receiving data from a server and for transferring the received data to said mobile unit.

### STATE OF PRIOR ART

A traditional transaction such as receiving downloads or tickets, making payments or validating tickets at transportation readers which involve personal devices (computers, mobile devices,) are well known.

For the completion of such transactions, data such as rights, credit or codes are stored in a contactless smart card or the like adapted for delivering said data upon request in response to a magnetic excitation for example. Typically a transaction (e.g. payment or transit ticketing) is achieved by tapping a contactless smartcard on a contactless reader.

There are more and more contactless smartcards in the market as it becomes very common place in our daily lives (government identification or other user identification, micro or macro payment, electronic money, pre-paid card,) and since it is a growing industry more is expected to be used in the future.

Therefore the user will probably have to manage several contactless smartcards having several provider specific services that can be deployed in a customable and implementation specific manner. As such credits, keys or credentials can be stored in one or more contactless smartcard.

Besides it is known that Contactless smartcards employ RFID technologies and can be designed using 2D or 3D form-factors. In a Contactless System they typically refer to the Transponder that consists of an inductive antenna connected to an integrated circuit. The Transponder converts the radio frequency field (RF Field) received from contactless reader also known as Proximity Coupling Device (PCD) and which can be embedded in a mobile user equipment. The RF Field is converted into DC voltage providing electrical energy in the integrated circuit of the Transponder thereby enabling the transponder to retrieve information (e.g. account data) in a memory module and return it over the air by radio frequency field means. This is known as a passive mode of communication as the Transponder does not use its own power source. It is well known that a mobile User Equipment behaving as a contactless smartcard therefore consume very few power because this power is extracted from the received RF Field; so the mobile user equipment should not need a battery to complete a contactless transaction.

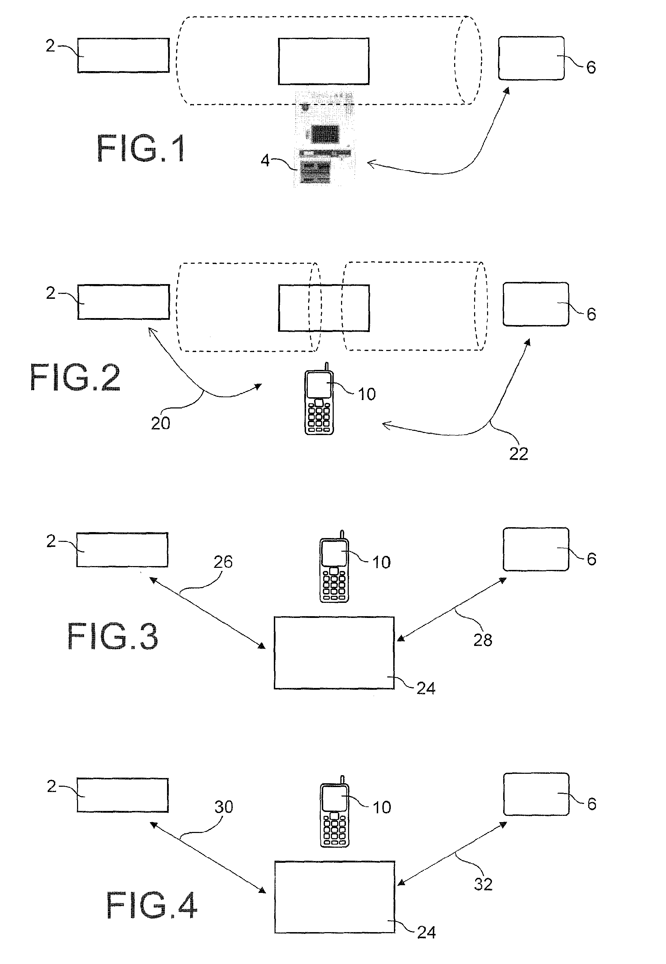

Traditional provisioning is usually carried out at point of sales or other vendor reloading machines because they ensure a secured connection with a back-end server. As shown at figure 1 illustrating a known reloading method of a server provider 2, traditional provisioning is usually carried out at point of sales or other vendor reloading machines 4 located at a fixed kiosk or fixed specific Service Provider point of sales. The provisioning information is first transmitted by the service provider 2 to the reloading machine 4. To obtain provisioning information, the user must connect a contactless card 6 to the reloading machines 4.

This solution is not always convenient for the user in a mobility context and the need exists to enable a more friendly interaction and more friendly way of provisioning a contactless smartcard (or Tag) in a secured and controlled manner. Besides in a mobility context the service provider needs to ensure that a correct Tag is provisioned.

An object of the invention is to overcome the above mentioned drawbacks.

### PRESENTATION OF THE INVENTION

The object of the invention is achieved by means of a method for enabling a user to use his UE, such as a mobile phone or a Personal Digital Assistant (PDA), as a reloading machine wherever he is and whether he has network connection or not (e.g. cellular communication or Wireless Local Area Network communication).

The invention is based on a method for transferring at least provisioning information from a server to at least a contactless-enabled mobile unit adapted for storing said provisioning information, characterized by the following steps:
- associating at least one identifier of said contactless-enabled mobile unit with said provisioning information,
- storing said association in a mobile User Equipment,
- transmitting said provisioning information to said mobile User Equipment through a secure channel,
- transferring the provisioning information from the mobile User Equipment to the contactless-enabled mobile unit through a contactless secure channel using said association

According to a preferred embodiment of the invention, the transfer of said provisioning information from the mobile User Equipment to the contactless-enabled mobile unit is achieved using the RFID technique.

This can be achieved based on the specification ISO 14443 type A & B (a standard for Proximity card operating at 13.56MHz typically offering a read distance up to 10cm) or 15693 (a standard for Vicinity Card typically offering a read distance from 1 to 1.5 meters). This can also be achieved under very low frequency below 135 KHz to be used for very low data rates transmission (e.g. HID or I-Code) or under ultra high frequency around 900 MHz

According to a second embodiment of the invention, the transfer of said provisioning information from the mobile User Equipment to the contactless-enabled mobile unit is achieved using the NFC technique.

This is typically achieved based on specification ISO 18092 (a standard defining the Near Field communication Interface and Protocol NFCIP-1 based, operating at 13.56MHz, and defining passive and active mode of operations).

In both embodiments, the transfer of the provisioning information from the mobile User Equipment to the contactless-enabled mobile unit is controlled by a secured reloading application securely hosted in the mobile User Equipment.

Said secured reloading application may be factory-configured in the mobile User Equipment or dynamically provisioned to said mobile User Equipment.

The reloading configuration can be stored in the form of a table created by the reloading application. The association of provisioning information, for a given service (e.g. a transit application), with one or a plurality of contactless-enabled mobile units such as contactless smartcards (Tags) enables the transfer of provisioning information to those contactless-enabled mobile units in a controlled way.

In a particular variant of the invention, the transfer of provisioning information to contactless-enabled mobile units is performed automatically by the reloading application either when the user brings the mobile User Equipment to the contactless-enabled mobile unit or when the mobile User Equipment detects said contactless-enabled mobile unit.

Said reloading application is under the control of the user of the mobile User Equipment.

In a particular variant of the invention said reloading application can be a Financial/Payment-based or a Transit-based Application.

The provisioning information may be a static data associated to a specific service, or static data representing credit subscription to a specific application and/or to a specific service, or a command to be transmitted by contactless-enabled mobile units s to a control access system for controlling the access to a room or to an on line service.

In a specific application of the invention, said command is an Application Protocol Data Unit (APDU) command formatted according to ISO/IEC 7816 part 4.

In another specific application of the invention, said command can be a NFC Forum Data Exchange Format (NDEF) message.

Thanks to the method according to the invention, customizable and controlled operations are provided for enabling a mobile User Equipment to perform reloading operation on behalf of one or multiple contactless devices behaving as contactless smartcards locally registered in the mobile User Equipment as allowed cards.

In this application, once the transaction is accomplished, the mobile User Equipment spreads the provisioning information to the allowed cards.

This has the advantage to dispatch money or credit account onto several transportation contactless smartcards.

In a preferred embodiment of the invention, the contactless-enabled mobile unit is a contactless smart card.

Said contactless-enabled mobile unit can advantageously be a multi-application contactless transit/payment card according to a defined co-branded business card model.

Said mobile unit may also be a second User Equipment or a PDA adapted for communicating with the first mobile UE through a secure contactless channel using the RFID technique and/or the NFC technique.

The invention is implemented by means of a Mobile User Equipment configured for receiving provisioning information from a server and for transmitting said provisioning information to a contactless-enabled mobile unit, said Mobile User Equipment comprising:
- means for associating at least one identifier of said contactless-enabled mobile unit with said provisioning information,
- a secured memory for storing said association,
- means for verifying if said contactless-enabled mobile unit is authorised to be provisioned,
- means for transferring said provisioning information to said contactless-enabled mobile unit through a contactless secure channel.

In one embodiment of the invention said means for associating at least one identifier of said contactless-enabled mobile unit with said provisioning information is a configuration table.

The mobile UE according to the invention further comprises means for establishing a secured contactless channel using NFC technique or RFID technique for transferring the provisioning information to the contactless-enabled mobile unit and a secured reloading application for controlling the transfer of said provisioning information to said contactless-enabled mobile unit.

Said reloading application can advantageously be used for traditional fare payment systems such as transit ticketing applications since the back server system for normal payment operation may not be provided. As such electronic token or pass can be purchased by the user and reloaded into a contactless smartcard in a data file which will be read and updated by bus readers or fare gates.

The invention can also prove advantageous in financial services such as in quick service restaurant, convenience stores, vending machines, book/music stores, drugstore or gas station where small transaction values are performed. A reloading of the credit/debit card data file can therefore be achieved according to present invention.

The invention is implemented by means of a Contactless-enabled mobile unit adapted for storing provisioning information and for returning said provisioning information upon request, said provisioning information being previously transferred from a server to a Mobile User Equipment, wherein said contactless-enabled mobile unit is further adapted for receiving the provisioning information from said Mobile User Equipment using RFID technique and/or NFC technique.

### BRIEF DESCRIPTION OF THE FIGURE

Other features and advantages of the invention will appear from the following description taken as a non limiting example with reference to the following drawings in which:
- figure 1 is a schematic representation of a known reloading method in the prior art,
- figure 2 a schematic representation of the reloading method according to the invention,
- figures 3 and 4 represent the main steps of the method according to the invention,
- figure 5 is a block diagram schematically illustrating an overview of the method according to the invention,
- figure 6 is a block diagram schematically illustrating a first embodiment of the invention,
- figure 7 is a block diagram schematically illustrating a second embodiment of the invention,
- figure 8 is a block diagram schematically illustrating a third embodiment of the invention.
- figure 9 is a system overview illustrating the connection of the Mobile UE reloading machine with a Transit/Financial Payment System
- figure 10 is a block diagram illustrating an embodiment of a Mobile UE contactless architecture supporting the reloading machine feature.

### DESCRIPTION OF A DETAILED ENBODIMENT OF THE INVENTION

Referring now to figure 2 schematically illustrating reloading system wherein a mobile user equipment 10 used as a mobile reloading machine is connected to a service provider 2 through a secure channel 14, and receives from said service provider 2 credentials or any provisioning information including even an application to be used by a contactless card (or Tag) 6 in a control access application for example. Said provisioning information is reloaded into the Tag 6 using contactless communication 22 means.

As illustrated at figure 3, a configuration table 24 comprising a tuple {CardID, InformationID, ServiceID) and the provisioning information referenced by the InformationID are transferred (step 26) by the service provider 2 to the mobile user equipment 10 (i.e. in the SIM/USIM of a mobile phone), CardId representing an identifier of the Contactless Card 6, InformationID representing an identifier of the Provisioning information to be transferred to the Contactless Card 6, and ServiceID representing an identifier of the Service (available in said contactless card 6) to which said Provisioning information is related.

The association of cardID(s) with said provisioning information stored in said configuration table 24 ensures secure provisioning of the contactless cards 6.

At step 28, the mobile user equipment 10 detects the Contactless Card 6, check that the contactless card can be provisioned using the information stored in the tuple {CardID, InformationID, ServiceID) and transfers the credit/credential to the identified Contactless Card.

Since the reloading application is hosted in the mobile user equipment 10 and provided the provisioning information has already been downloaded, the user can reload a Contactless Card 6 whenever he wants even if there is no network connection available for providing a secured reloading application.

Figure 4 illustrates another embodiment of the invention in which the Service Provider 2 does not mandate a specific contactless card 6 to be reloaded. In this case, the mobile user equipment 10 is allowed to register new contactless cards by means of a Card Register function communicating with the Reloading Configuration Table.

This Card Register function allows:
- Discovering a contactless card near the mobile user equipment 10 (step 32),
- Checking if the contactless card is supported by the service transmitted by the service provider 2 (step 30) and is allowed to be registered by said service.
- Registering the Identifier of the contactless card as an authorized contactless card in the configuration table and associated to said service for future reloading operation.

Preferably, the service identifier may further come with a certificate that ensures that it is not a malware service and that the mobile UEcan trust this service.

The invention advantageously enables easy deployment of services, and therefore the deployment of different reloading service applications thanks to a Reloading Configuration element. Said Reloading Configuration element can be designed by way of a Reloading Configuration table.

The later is preferably stored in the mobile user equipment 10 and provides the following advantages:
- ensuring the correct Tag is provisioned in a controlled, personalized and secured manner.
- a preferably unique configuration table for potentially any kind of Reloading Service (or application),
- safe deployment and configuration of new Reloading services thanks to the association of provisioning information and cardID
- easy configuration of a Reloading service into any Tag if authorized.

The Reloading Configuration Table maintains association of a Card and a Provisioning Information. Because a Tag may host several applications (or Services) it further associates the ServiceID thereby enabling to distinguish several applications in a Tag.

The invention further advantageously overcomes the issues of determining whether a Tag can be reloaded or not.

Provisioning information is preferably stored on a secured area in a specific memory of the mobile user equipment 10 and Configuration Table either stores this provisioning information or provides means to access it (e.g. file referencing).

According to another aspect of the invention, the reloading application is configured for transferring provisioning information to the Tags in 'battery off' mode. This is enabled thanks to an additional flag indication called "intelligent mode flag" providing automatic reloading operation as follows:
- if the flag is activated, the reloading application checks the Reloading Configuration Table that further indicates loading preferences. Such preferences can be in the form of a script indicating the scenario to be executed by the application.

Advantageously this mode also enables fast reloading operation even in 'battery on' mode for automatic tasks.

Another feature of the invention consists in enabling the mobile reloading machine 10 to know whether a Tag has effectively been reloaded.

Actually the problem with RFID touch based behavior is that the mobile reloading machine 10 may upload data to the Tag 6 but may not receive the Acknowledgment (ACK) if the Tag 6 and the mobile reloading machine 10 are suddenly out of coverage. Since the mobile reloading machine 10 does not receive the ACK, it should interpret that the reloading operation has failed, though this may not be true.

To overcome this drawback, the Tag 6 is configured to notify reloading status during Tag detection. It can be in the form of number randomly generated by the mobile UE at previous reloading operation attempts thereby enabling the mobile UE to ascertain whether the Tag needs to be reloaded again at next reloading operation attempts. As such this information is used by the mobile reloading machine 10 to know whether reloading information can be reloaded again or not and to flush the provisioning information locally stored.

When provisioning information has been provisioned to one or more Tag(s) the Reloading Application updates the configuration Table 24 in order to update or remove provisioning information. For instance such update occurs in the typical case where a user buys 4 transit tickets of 1 day validity and reloads only two of them in the mobile unit(s) so the provisioning information is updated to 2 tickets in the reloading configuration table.

Furthermore, the Reloading Application notifies the user of the reloading operation status (success, Failure, Tap again,). "Tap again" would enable the user to tap the Tag again in case the mobile reloading machine is not sure the mobile unit has been effectively provisioned. Since the Tag notifies the reloading status the user will be notified that previous reloading operation was correctly performed.

Further security mechanisms may be added to the reloading process, e.g. by adding authentication and integrity protection during the contactless communication without departing from the scope of the invention.

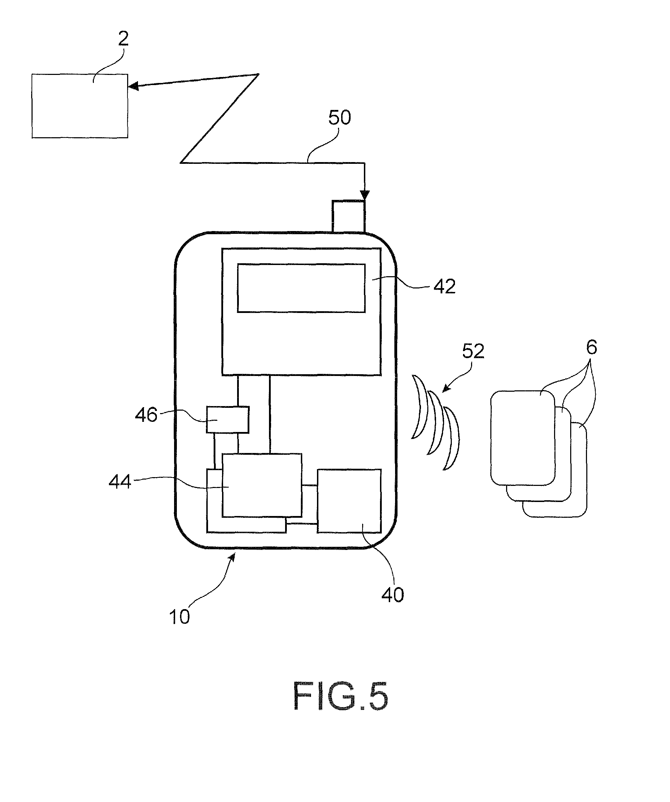

Figure 5 schematically illustrates a mobile user equipment 10 used as a reloading machine.

Said mobile user equipment 10 comprises a User Interface Application 42, secured memory comprising a reloading application 44 (RAPP) and a configuration table 46 comprising identifiers of said provisioning information, an identifiers of information to the Tags 6 through a contactless secure channel.

The reloading process is achieved by two steps:
- provisioning information is firstly downloaded (step 50) from the Service Provider 2 to the mobile user equipment 10,
- the mobile user equipment 10 and the Tag 6 are then brought within range in order to perform the reloading operation of service credit/credential using the RFID technique or the NFC technique (step 52).

Association of {CardID, Provisioning Information} is maintained in the Configuration Table 46 for flexibility and interoperability purpose.

Instead of duplicating such association management, the Configuration Table 46 preferably provides a common Interface that separates the data repository and management from the reloading operation management. The Configuration Table 46 also enables homogeneous reloading behavior over multiple Reloading Applications (RAPPs). It authorizes reloading operations on detected contactless cards 6.

Additionally the RAPP 44 may be configured to enable setting of preferences like dispatching certain amount on a given Tag and the amount left on another Tag. In such a case a management application is dedicated to the Configuration Table 46.

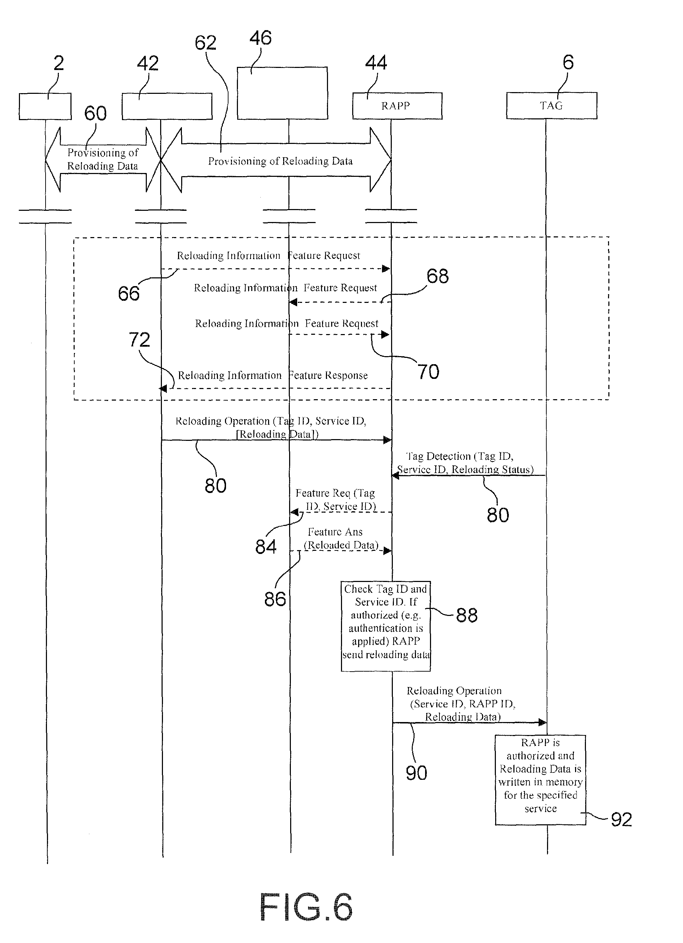

Figure 6 illustrates the steps of a manual Tag reloading process.

At step 60, the server 2 transmits to the User Interface application (UI APP) 42 of the mobile user equipment 10 Reloading data consisting of a tuple {CardID, Provisioning Information, ServiceID}.

At step 62, the User Interface application (UI APP) 42 transmits said Reloading data to the RAPP 44.

At step 66, the UI APP 42 transmits a request to the RAPP 44 to get reloading information. For example the user may want to personalize how each tag is provisioned (e.g. amount, transit ticket, others ...)

At step 68, said RAPP 44 transmits said request to the reloading configuration table 46.

At step 70, the reloading configuration table 46 transmits a Reloading Information response containing provisioning related information to the RAPP 44.

At step 72, said RAPP 44 transmits said response to the UI APP 42.

It is to be noted that the Configuration Table 46 maintains Association of CardID, ServiceID and authorizes access to Provisioning information. This function may also be part of the reloading application itself but is logically separated in the figure for clarity reason. It may also perform authentication of CardID and/or ServiceID if needed. At step 80, The UIAPP 42 performs a reloading operation and specifies the amount of credits (or electronic money, or other type of provisioning information) related to the reloading application

At step 82, the RAPP 44 receives Contactless information including the CardID and potentially the ServiceID.

At step 84, the RAPP 44 interacts with the Configuration Table 46, using common Interface, to get authorization and provisioning information if required. CardID and/or ServiceID may be authenticated.

At step 86, RAPP get authorization from the Configuration Table 46.

The Configuration Table 46 stores the Provisioning data and thus returns said provisioning data with the authorization. Said authorization may be access to a secured area by file referencing, or other means.

At step 88, the RAPP 44 checks the TAGID and the ServiceID.

At step 90, the RAPP 44 provisions the correct Contactless Card 6 with the correct provisioning information. The Contactless Cards 6 may have internal UICC with authentication intelligence and may also authenticate the RAPP 44 before storing the provisioning data in its internal local memory. At step 92, the Reloading data are written in the TAG memory for the specified service.

It is to be noted that steps 66 to 72 are optional and enables a user to get provisioning information from an Application (ServiceID) that he can dispatch or totally provision to a contactless card. For example, user may dispatch 1/3 of amount on one transportation card and 2/3 on another one. Preferably, the UI APP 42 interacts with RAPP 44. However UIAPP 42 may also directly access Configuration Table 46.

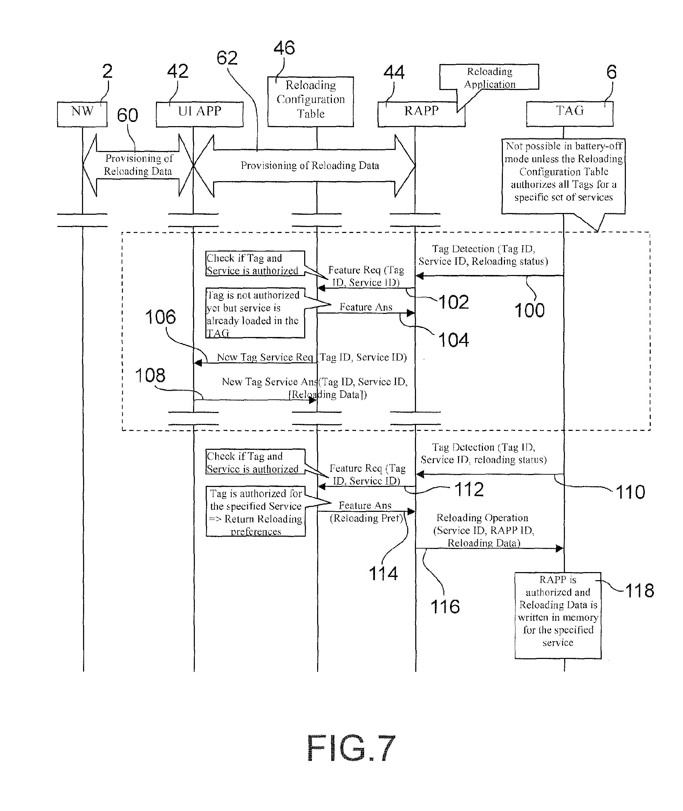

Figure 7 illustrates an Automatic Reloading in a TAG 6 of Service credentials such as credits for public transportation, access control rights.

Steps 60 and 62 are identical to those of figure 6.

At step 100, the RAPP 44 receives a TAG detection message comprising a TagID, a ServiceID and potentially a Reloading Status.

At step 102, the RAPP 44 sends a request comprising said TagID, a ServiceID to the Configuration Table 46. The later checks if the Tag and the service identified in the request are authorized or not.

If the Tag is not authorized, at step 104, the Configuration Table 46 transmits the RAPP 44 a response indicating that the Tag is not authorized yet, but the service is already loaded in the Tag.

At step 106, the Configuration Table 46 transmits the UI APP 42 a new tag Service Request comprising TagID, a ServiceID. This is done, if allowed by the service, so that the user can associate the card to the service and therefore be able to provision such tag. The user can eventually set the provisioning preference for this tag.

At step 108, the UI APP 42 transmits the Configuration Table 46 a tag Service response comprising the TagID, the ServiceID and eventually provisioning preferences (e.g. transit tickets, amount).

At step 110, the RAPP 44 receives a TAG detection message comprising a TagID, a ServiceID and potentially a Reloading Status.

At step 112, the RAPP 44 sends a request comprising said TagID, a ServiceID to the Configuration Table 46. The later checks if the Tag and the service identified in the request are authorized or not.

If the Tag is authorized, at step 114, the Configuration Table 46 transmits the RAPP 4 a response indicating that the Tag is authorized for the specified service and returns Reloading Preferences.

At step 116, the RAPP 44 transmits the ServiceID, the Rapp ID and the Reloading Data to the Tag 6.

At step 118, the Tag authorizes the Rapp 44 and the Reloading Data is written in the Tag memory for the specified service.

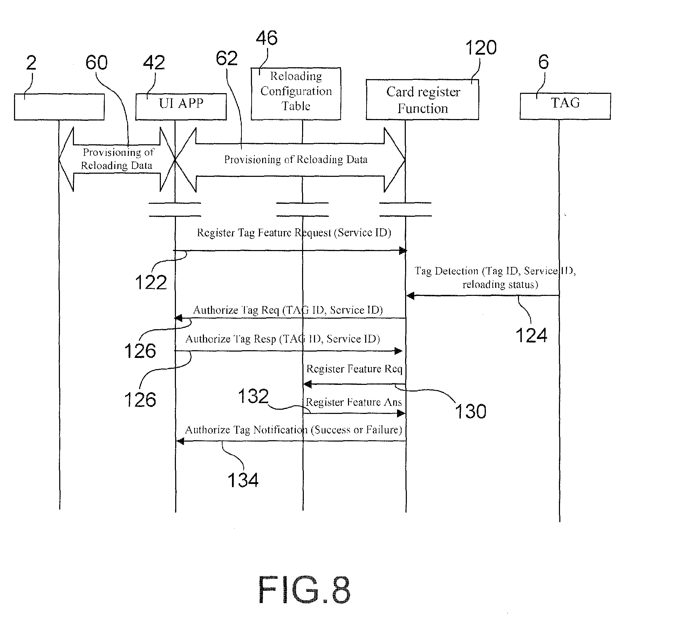

Figure 8 illustrates the Card Register function 120 for a Tag registration. A new tag is allowed depending on the policy of the issuer of the service. The tag register is triggered by the UI application.

Steps 60 and 62 are identical to those of figure 6.

At step 122, the UI APP 42 transmits a Register Tag Request comprising a ServiceID to the Card Register function 120. The serviceID identifies the service to which would be associated a card.

At step 124, the tag 6 transmits to the Card Register function 120 a message comprising the TagID, a serviceID and potentially a Reloading status.

At step 126, the Card Register function 120 transmits to the UI APP 42 a Request comprising a TagID and a serviceID for authorizing the indicated Tag for the indicated Service.

At step 128, the UI APP 42 sends to the Card Register function 120 a response comprising said TagID and a serviceID. This response determines whether the card has to be registered or not.

At step 130, the Card Register function 120 transmits to the Configuration Table 46 a Register Feature Request.

At step 132, the Configuration Table 46 transmits to the Card Register function 120 a Register Feature Response. The association of the discovered tag 6 with the service is stored in said Configuration Table 46.

At step 134, the Card Register function 120 transmits to the UI APP 42 a notification indicating whether the Tag 6 is authorized or not.

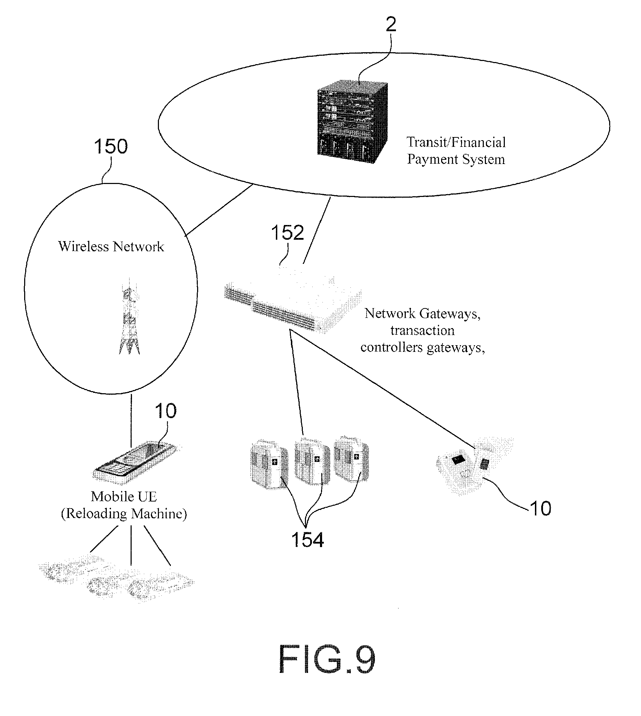

Figure 9 illustrates a transit system implementing the invention wherein the server 2 is a Transit Payment Platform receiving raw transaction from mobile UEs 10through a wireless network 150. A network gateway 152 is provided between the Transit Payment Platform 2 at one hand, and a UE 10 and contactless transit gateway devices 154 behaving as contactless smartcards at the other hand, for controlling the transactions said UE 10.

An issue in known traditional system is that the cardholder is registered using the CardID information. However the user may buy individual tickets that may relate to a specific cardID or not. The mobile UE 10 would then spread the tickets to other contactless mobile units. However since a payment transaction is performed onto a specific cardID, traditional ticket payment system cannot perform the desired service. The Solution enables the UE 10 to perform reloading operation on behalf of some card holders (i.e. CardID) locally registered in the mobile UE 10 as allowed (or verified) cards. Once the transaction is accomplished, the mobile UE 10 can spread the money to the allowed cards. The solution also enables to buy individual non-nominative tickets thereby enabling the mobile UE's owner to spread the tickets as desired to one or multiple contactless smart cards (or contactless devices behaving as contactless smartcards). This can be achieved with respect to the application issuer's policy.

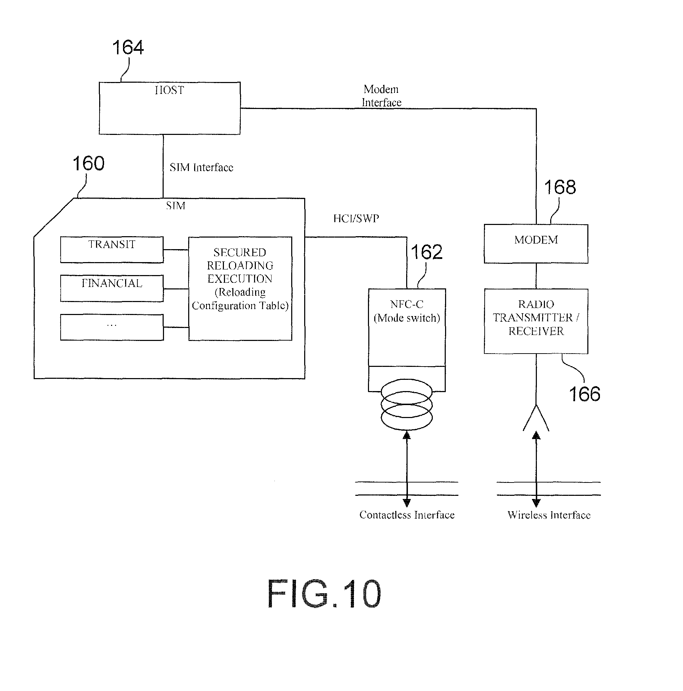

Figure 10 provides a more detailed NFC-based implementation comprising a SIM (Subscriber Identification Module) 160 connected through SWP (Single Wire Protocol) to the NFC-C Controller 162. Host Controller Interface (HCI) commands are exchanged between the SIM 160 and the NFC-C module 162.

A Host 164 is connected to the SIM 160 via the SIM physical I/F and to a radio transmitter/receiver 166 via a modem 168.

Purpose of this implementation is to depict a functional reloading architecture.

It is well known that the NFC Controller (NFC-C) 162 supports at least the Link layer communication implementing RF standards as defined by the NFC Forum (ISO 14443A&B and Felica). The NFC-C Controller 162 also includes a mode switch capability governing the NFC Forum device activities that process both Poll & Listen modes. The Poll mode consists of generating a carrier and probes ("polls") and poll command sequences are set appropriately whereas the Listen mode consists in listening the RF field within a maximum duration listen period mode period of time. More particularly in Poll mode, the NFC device firstly detect whether NFC-A, NFC-B, and NFC-F are present in the radio frequency before proceeding with the collision detection and retrieval of the capabilities of the device, the selection of a Technology (A, B or F), the collision resolution depending on the selected technology, and finally the device activation. The device activation can be Peer-to-peer (NFC-A), or Tag 1 or Tag 2 or Tag 3 or Tag 4 emulation activation.

Application selection is a complex task handled both by ETSI (connecting of the Host Control with the Subscriber Identity module) and by NFC Forum (NFC Controller Interface connecting the NFC-C to possibly several execution environments). Complexity, at the time of writing, merely relates to multiple Forwarding techniques and pipes allocation issues due to the existing communication modes a device can support (card emulation, reader/writer, P2P) and their time response requirement. Attention should be paid that having the application selection function as part of the NFC-Controller responsibility requires it to have more intelligence and know all applications to direct a processing to the correct execution environment (or it could be instructed by a primary execution environment such as the SIM).

The implementation illustrated in figure 10 is a more simplified architecture by way of example only. The host execution selection is agnostic and the applications are solely hosted on the SIM 160. The SIM 160 is therefore the only application execution environment connected through SWP (Single Wire Protocol) to the NFC-C controller 162.

As explained above the NFC-C controller 162 handles mode switch functionality. The Secured Reloading Execution manages the association of CardID and Provisioning information, checks the detected cardID is authorized and forward the communication to the appropriate Transit/Financial application based on said association. It will be appreciated that this is a centralized management that first receives incoming contactless request before transferring the process to the right reloading application. Because it provides reloading application selection function, this is a rather different communication scheme than what was presented in figure 6, 7, and 8 where the reloading Applications directly received the requests. Another implementation could distribute the association function in each Application without departing from the scope of the invention. Another implementation could store application and data files in the NFC-Controller chip. Besides, there is a one-to-one relationship between UI Applications in Host and secured Applications in SIM 160 which means that reloading operations are dependent upon the application type. An advantage of the centralized management is to hide the cardID verification to applications and to centralize the association of cardID/provisioning information; while a distributed management would require each application to handle the CardID/provisioning association.

A possible use case depicted herein with figure 10 is that a user buys transit tickets to be loaded into two contactless smartcards. The following depicts the process to achieve the desired service.

An end-to-end secured channel through the wireless interface is established between the secured Transit Application (in SIM) and the Transit Payment System Server via the Host Transit UI Application that acts as a proxy.

The ticket payment transaction is achieved and a Transit Data File Record is preferably stored by the Secured Reloading Execution (or in a secured memory module reachable using files referencing techniques).

Alternatively the Transit Data File Record can be stored in the Transit Application in SIM 160.

The Secured Reloading Execution controls the NFC-C controller 162 and activates it in polling mode. When a Tag is brought within range of the UE contactless reader, the Tag is detected and notified to the Secured Reloading execution which checks if the CardID is associated to provisioning information by checking the configuration table and forwards the processing to the appropriate reloading Application being the Secured Transit Application (e.g. based on the Application ID information). The transit application retrieves the reference of the provisioning information from the configuration table and it handles the rest of the communication session by sending a command message (e.g. ISO7816-4 command) to the contactless smartcard including the Transit data file record. The command message is created based on the provisioning information retrieved previously. For instance the information can include a pre-funded balance to be stored in the contactless. It shall be understood that the above description is a simple implementation wherein the application function is placed on the SIM but if the NFC-C handles the application selection function as currently being studied by the NFC Forum specification, it is the NFC-C that forwards the processing to the appropriate application (which should be registered with the NFC-C) and the provisioning information is returned to the application for a given set of Tag via the configuration table storing the association of provisioning and card identifier. Moreover the applications could also be located on the NFC device Host 164.

## Claims

1. Method for transferring at least a set of provisioning information to at least a contactless-enabled mobile unit (6) adapted for storing said provisioning information, **characterized by** the following steps:
- associating at least one identifier of said contactless-enabled mobile unit (6) with said provisioning information,
- storing said association in a mobile User Equipment (10),
- transmitting said provisioning information to said mobile User Equipment (10) through a secure channel,
- transferring the provisioning information from the mobile User Equipment (10) to the contactless-enabled mobile unit (6) through a contactless secure channel using said association

2. Method according to claim 1, wherein the transfer of said provisioning information from the mobile User Equipment (10) to the contactless-enabled mobile unit (6) is achieved using the RFID technique.

3. Method according to claim 1, wherein the transfer of said provisioning information from the mobile User Equipment (10) to the contactless-enabled mobile unit (6) is achieved using the NFC technique.

4. Method according to claim 2 or 3, wherein said transfer is controlled by a secured reloading application (44) securely hosted in the mobile User Equipment (10).

5. Method according to claim 4, wherein said secured reloading application (44) is factory-configured in the mobile User Equipment (10).

6. Method according to claim 4, wherein said secured reloading application (44) is dynamically provisioned to mobile User Equipment (10).

7. Method according to claim 4, wherein the transfer of said provisioning information from the mobile User Equipment (10) to the contactless-enabled mobile units (6) is performed automatically by the reloading application (44) either when the user brings the mobile User Equipment (10) to the contactless-enabled mobile unit (6) or when the mobile User Equipment (10) detects said contactless-enabled mobile unit (6).

8. Method according to claim 4, wherein said reloading application (44) is under the control of the user of the mobile User Equipment (10).

9. Method according to claim 1, wherein the provisioning information is a static data associated to a specific service.

10. Method according to claim 9 wherein said static data represents credit subscription to a specific application and/or to a specific service.

11. Method according to claim 1, wherein the provisioning information represents a command.

12. Method according to claim 11, wherein said command is an Application Protocol Data Unit (APDU) command.

13. Method according to any one of claims 9 to 12 wherein the mobile User Equipment (10) is adapted to perform reloading operation on behalf of one or multiple contactless devices behaving as contactless smartcards locally registered in the mobile User Equipment (10) as allowed cards, and wherein, Once the transaction is accomplished, the mobile User Equipment (10) spreads the provisioning information to said allowed cards.

14. Method according to anyone of claims 1 to 12 wherein said contactless-enabled mobile unit (6) is a contactless smart card.

15. Method according to anyone of claims 1 to 12 wherein said contactless-enabled mobile unit (6) is second User Equipment.

16. Method according to anyone of claims 1 to 12, wherein said contactless-enabled mobile unit (6) is a PDA.

17. Mobile User Equipment (10) configured for receiving provisioning information from a server (2) and for transmitting said provisioning information to a contactless-enabled mobile unit (6), **characterized by**:
means for associating at least one identifier of said contactless-enabled mobile unit (6) with said provisioning information,
- a secured memory for storing said association,
- means for verifying if said contactless-enabled mobile unit (6) is authorised to be provisioned,
- means for transferring said provisioning information to said contactless-enabled mobile unit (6) through a contactless secure channel.

18. Mobile User Equipment (10) according to claim 17 wherein said means for associating at least one identifier of said contactless-enabled mobile unit (6) with said provisioning information is a configuration table.

19. Mobile User Equipment (10) according to claim 17 further comprising means for establishing a secured contactless channel using NFC technique or RFID technique for transferring the provisioning information to the contactless-enabled mobile unit (6)

20. Mobile User Equipment (10) according to claim 19, comprising a secured reloading application (44) for controlling the transfer of said provisioning information to said contactless-enabled mobile unit (6).

21. Contactless-enabled mobile unit (6) adapted for storing provisioning information and for returning said provisioning information upon request, said provisioning information being previously transferred from a server (2) to a Mobile User Equipment (10) (10), wherein said contactless-enabled mobile unit (6) is further adapted for receiving the provisioning information from said Mobile User Equipment (10) using RFID technique and/or NFC technique.

22. Contactless-enabled mobile unit (6) according to claim 20 consisting of a contactless smart card.

23. Contactless-enabled mobile unit (6) according to claim 20 consisting of a second Mobile User Equipment.
